# EUROPEAN PATENT APPLICATION

(11) **EP 2 093 238 A1**
(43) Date of publication of application: **26.08.2009**
(21) Application number: 08290171.1
(22) Date of filing: 21.02.2008
(51) Int. Cl.: C08C 19/04, C08C 19/06

(54) **Process for preparing hydroperoxidized elastomers and their use in high impact monovinylaromatic polymers**

(71) Applicant: Total Petrochemicals France, 92047 Paris La Défense Cedex (FR)
(72) Inventor: Duc, Michel, 64000 Pau (FR)
(74) Representative: Neel, Henry

(57) **Abstract**

The present invention relates to a process for preparing hydroperoxidized elastomers comprising :
a) mixing hydrogen peroxide and an hypochlorite solution to generate singlet oxygen,
b) contacting said singlet oxygen with at least an elastomer in a solvent at conditions effective to hydroperoxidize said elastomer.

In a preferred embodiment steps a) and b) are incorporated in a process for preparing a high impact monovinylaromatic polymer.

In other words said preferred embodiment is a process for preparing a high impact monovinylaromatic polymer comprising :
a00) forming a polymerizable mixture comprising at least one monovinylaromatic monomer and optionally one or more comonomers,
a0) dissolving at least an elastomer in said polymerizable mixture to form an elastomer containing polymerizable solution,
a) mixing hydrogen peroxide and an hypochlorite solution to generate singlet oxygen,
b) contacting said singlet oxygen with the polymerizable solution at conditions effective to hydroperoxidize said elastomer,
c) polymerizing the solution obtained at step b) optionally in the presence of a free radical initiator, optionally in the presence of chain transfer agents.

## Description

### [Field of the invention]

The present invention relates to a process for preparing hydroperoxidized elastomers and their use in high impact monovinylaromatic polymers. Singlet oxygen is produced from hydrogen peroxide and hypochlorite anions (H₂O₂/ClO ⁻), then by reaction with an elastomer (also called rubber in the present invention) said elastomer is converted to a hydroperoxidized elastomer. Said hydroperoxidized elastomer is used to make high impact monovinylaromatic polymers. This hydroperoxidation is environmentally friendly because the only by-products are water and a chloride anion. By way of example the by-product is sodium chloride when the hypochlorite comes from sodium hypochlorite (NaClO). By way of example the high impact monovinylaromatic polymer is a high impact polystyrene (HIPS).

### [Background of the invention]

Rubber-reinforced polymers of monovinylaromatic compounds, such as styrene, alphamethyl styrene and ring-substituted styrenes are desirable for a variety of uses. More particularly, rubber reinforced polymers of styrene have included therein discrete particles of a crosslinked rubber, for example, polybutadiene, the said discrete particles of rubber being dispersed throughout the styrene polymer matrix and in addition said particles of rubber contain polystyrene inclusions. HIPS can be used in a variety of applications including refrigerator linings, packaging applications, furniture, household appliances and toys. Such HIPS are described in WO 01-68765, EP 1148086, US 6825270, EP 770632, EP 1251143, EP 620236, US 2005-0070662, US 6569941 and EP 664303.

The process for making HIPS is well known to those skilled in the art and consists of polymerizing styrene monomer in the presence of dissolved rubber. Polymerization of styrene, and optionally a comonomer, is initiated by heating and/or by an initiator, by way of example a radical initiator. The rubber is "dissolved" in the styrene monomer (actually the rubber is infinitely swollen with the monomer). The usual rubber types utilized in the manufacture of HIPS include polybutadiene (PB), styrene-butadiene rubber (SBR), and styrene-butadiene-styrene rubber (SBS). Polystyrene is initially formed from the styrene monomer within the homogeneous rubber solution in styrene. At the beginning of the polymerization the reacting solution is at a point prior to the rubber/styrene inversion point, i.e. the point at which the solution being reacted goes from polystyrene particles in a rubber/styrene monomer matrix to rubber particles in a polystyrene matrix. When the degree of polymerization is about equal to the weight % of rubber in the system, it inverts e.g. the styrene/styrene polymer phase becomes continuous and the rubber phase becomes discontinuous. Styrene is polymerized around and within the rubber particles which leads to polystyrene inclusions in the rubber particles. A portion of the styrene is polymerized by grafting on the rubber, another portion is homopolymerized, said portion is referred to as a "non-grafting" polymerization. In HIPS a part of the styrene may be replaced by unsaturated monomers copolymerizable with styrene such as other monovinylaromatic monomers, alkyl esters of acrylic or methacrylic acid and acrylonitrile. The same mechanism of "grafting" and "non-grafting" occurs with the styrene comonomer, which means one portion of the styrene and of the comonomer are polymerized by grafting on the rubber, another portion of the styrene and of the comonomer are copolymerized. The properties of HIPS are related to the amount of rubber, the type of rubber, the rubber particles size as well as the polystyrene included in the rubber particles. The proportion of styrene, and the optional comonomer, which is grafted (polymerized by the "grafting" way) is linked to the functionalization of the rubber.

Rubber-modified vinylaromatic polymer compositions are well-known in the prior art. Composition fine-tuning so as to reach well balanced physical properties remains however a matter of know-how. Apart from the control of the phase rheological behaviours, the control of rubber phase grafting that occurs typically *in situ* during the conventional radical HIPS process is a challenge hard to overcome. Rubber phase grafting is indeed usually adjusted through the addition of organic peroxides, generating preferably H-abstracting radicals by thermal decomposition, and well-chosen according to their half-life decomposition temperature and the reactor temperature settings. However, the *in situ* rubber grafting during the HIPS process remains intrinsically a random reaction. A lot of processes have been described in the prior art about the modification of rubbery polymers so as to enhance and better control their graftability during the conventional HIPS process. They all rely on the functionalization of at least a part of the rubbery chains by chemical groups that can release active radicals and initiate vinylaromatic monomer polymerization from the rubber chain backbone. This rubber modification can be carried out in a specific process or *in situ* in the HIPS process.

US 6255402 relates to a process for preparing a composition comprising a vinylaromatic polymer matrix and particles of rubber, which comprises a step of polymerizing at least one vinylaromatic monomer in the presence of a rubber comprising a group which generates a stable free radical. Said rubber may be obtained, for example, by a process including a step of heat treatment of an elastomer conventionally used for the preparation of high-impact vinylaromatic polymers, in the presence of a stable free radical, of a free-radical initiator which is capable of withdrawing a proton from the elastomer, and of a solvent and in the absence of vinylaromatic monomer. The class of stable free radicals includes, in particular, the compounds acting as inhibitors of radical polymerization, the stable nitroxide radicals, i.e., those comprising the group =N--O. As stable free radical it is possible to use, for example, 2,2,5,5-tetramethyl-1-pyrrolidinyloxy, marketed under the trade name PROXYL, or 2,2,6,6-tetramethyl-1-piperidinyloxy, generally marketed under the name TEMPO.

US 2484353 relates to the preparation of hydroperoxide derivatives of polymers containing intralinear C=C unsaturation in the polymeric chain. The term "polymer hydroperoxide" as used in said prior art means a polymer characterized by a plurality of carbon to carbon double bonds and a plurality of oxygen-containing groups attached to carbon atoms in the polymer chain, the major amount of said oxygen-containing groups being hydroperoxide groups. The said hydroperoxides are prepared by a process which comprises contacting polymers containing intralinear C=C unsaturation with light and oxygen in the presence of photosensitizing catalyst. Such catalytic systems are known to generate singlet oxygen from air oxygen. The photooxidation is effected under conditions such that at least a major amount of the hydroperoxide substituent groups formed remain attached to carbon atoms in the polymer chain as hydroperoxide groups.

US 3846266 describes a process for preparing hydroperoxide derivatives of polymers having polymer backbones, composed only of carbon atoms, and hydroperoxide groups on pendant groups. The polymers are produced by subjecting polymers which contain C=C bonds lying in the non-linear part of the polymer chains, that is outside the polymer backbone, the carbon atoms of such bonds either containing two vicinal cis hydrocarbon groups which do not form part of one and the same cyclic system, or else contain at least 3 hydrocarbon groups, to irradiation by light in the presence of oxygen and a photo- sensitizer. The hydroperoxide derivatives obtained are useful as curing agents or vulcanizing agents in natural and synthetic rubbers, as paper coating resins, as starting materials in the production of graft copolymers, and as ingredients for resins and varnishes.

US 4717741 relates to rubber modified polymeric compositions. Specifically, it relates to polymers modified with grafted rubbery polymers, said grafted rubbery polymers being formed from a process involving a hydroperoxidized rubbery polymer intermediate. Said prior art concerns a rubber modified polymeric composition, the composition comprising:
(a) a generally rigid matrix phase; and
(b) a rubber modifying grafted rubbery polymer, said grafted rubbery polymer being formed by a process, the steps of the process comprising:
   - forming a polymerizable mixture comprising one or more free-radically polymerizable monomers;
   - dissolving a rubbery polymer having allylic hydrogen in the polymerizable mixture to form a rubber-containing polymerizable solution;
   - adding to the rubber-containing polymerizable solution, a photosensitizing amount of a photo sensitizing agent;
   - oxygenating the rubber-containing polymerizable solution;
   - exposing the oxygenated rubber-containing polymerizable solution to electromagnetic radiation wherein triplet oxygen is converted to singlet oxygen and hydroperoxide derivatives of the rubbery polymer are formed;
   - initiating polymerization of the rubber-containing polymerizable solution; and
   - continuing polymerization of the rubber-containing polymerizable solution at least until the desired degree of grafting to the rubbery polymer is obtained.

US 4876312 relates to an improved process for preparing rubber-modified polymeric compositions as well as the compositions prepared thereby. Specifically, it relates to polymers modified with grafted rubbery polymers, said grafted rubbery polymers being formed from hydroperoxidized rubbery polymer intermediates. The grafting of matrix polymer to hydroperoxidized rubber is conducted simultaneously with the polymerization of matrix polymer. The hydroperoxide derivative of the rubbery polymer may be previously formed or prepared concurrently during the polymerization process. This is accomplished by generation of singlet oxygen in the presence of the rubbery polymer by any suitable technique. A preferred method is the light induced decomposition of a reactive organic peroxide. Alternatively, singlet oxygen can be formed from oxygen, ozone, or an ozone adduct such as a triphenylphosphite ozone adduct.

US 5075347 relates to a process for forming hydroperoxide derivatives of rubbery polymers. The hydroperoxide derivatives being particularly well suited for use as intermediates in forming graft rubbery polymers. The process involves dissolving a rubbery polymer in a monomer mixture and adding to the rubbery polymer/monomer mixture a photosensitizing agent. The rubbery polymer-monomer mixture is then oxygenated and exposed to light under conditions wherein triplet oxygen is converted to singlet oxygen. The improvement comprises adding to the rubbery polymer/monomer mixture a solvent capable of solubilizing the photosensitizing agent in the rubbery polymer/monomer mixture.

All these above prior arts resort to costful photosensitizers, most of the pigments may generate an undesired coloration of the final HIPS materials. Additionally, they comprise the direct exposure of the rubbery polymer to a source of UV-rich artificial light to initiate its hydroperoxidization. This represents a technical constraint and requires an adaptation of some of the facilities existing in a conventional HIPS production line. Photochemical reactions are especially hard to carry out in the industry on liquid phase processes and a "homogeneous" irradiation of the rubber polymer in solution can be a matter of concern. The biggest constraint of these processes come from the required direct exposure of the rubber solution - typically a solution of rubber dissolved in styrene monomer - to air oxygen, raising major concerns about undesired side autoxidation reactions of styrene monomer and safety risks (styrene inflammation). The co-injection of a solvent capable of improving the solubilization of the photosensitizer in the rubbery polymer / styrene monomer solution is also recommended in some of the abovementionedprior arts. However, most of recommended solvents adapted to the dissolving of powdery pigment photosensitizers raise HSE issues (e.g. methanol, chlorinated solvents). A process able to generate singlet oxygen and that can be most preferably associated to the conventional HIPS process without requiring the exposure of the rubber in styrene solution to air oxygen and without raising major HSE concerns is therefore highly desirable.

US 5,959,033 relates to modified polymers comprising a matrix polymer, a grafted non-block rubber and a grafting polymer. The grafting polymer is grafted to the rubber, which is dispersed throughout the matrix polymer in the form of rubber particles. In one embodiment of the process, singlet oxygen is utilized to attain the desired degree of grafting on the rubber by decomposition of phosphite ozonides in the vinyl aromatic monomer and rubber feed of a mass polymerization process. Phosphite ozonides can be produced by dissolving a phosphite, e.g. triphenyl phosphite, in an organic solvent at a low temperature, typically below about -60°C, in the presence of an excess of ozone. Typical solvents include inert solvents such as toluene, ethyl benzene and the like. An excess of ozone refers to a greater concentration of ozone than the concentration of phosphite in the reaction mixture. It is important to have an excess of ozone present in order to increase the yield of phosphite ozonide at colder temperatures, such as -80°C, which is the typical temperature used in making phosphorous ozonides. It has been found that if phosphite is in excess it decomposes part of the ozonide, reducing the yield of the reaction. The main drawback of said process is that the singlet oxygen source, namely the phosphite ozonides, can only be generated at a low temperature in the presence of highly toxic triphenyl phosphite and an excess of ozone. Considering the related HSE concerns this process may raise, its upscaling for industrial rubber hydroperoxidization within the conventional HIPS process appears unrealistic.

US 4895907 describes a free radical polymerization process employing as a polymerization initiator a bisquinone peroxide. Upon decomposition to initiate polymerization such bisquinone peroxides may also produce singlet oxygen capable of producing hydroperoxidized rubber if rubber is included in the polymerization mixture. The by-products formed from the decomposition of the bisquinone peroxide desirably comprise hindered phenolic compounds having antioxidant properties. These bisquenone peroxides are however not commercially available and must be tailor-made from highly toxic raw materials such as potassium ferricyanide that might be found as residual traces in the singlet oxygen source. Here again, the adaptation of this technique to industrial HIPS production appears questionable.

It has now been discovered an environmental-friendly process aiming at producing hydroperoxide derivatives of rubbery polymers and their use for manufacturing rubber-modified vinylaromatic polymers characterized by an improved rubber utilization efficiency and better-balanced mechanical properties. The hydroperoxidization reaction is carried out by singlet oxygen generated either *in situ* or ex *situ* the conventional HIPS process. Pure singlet oxygen is generated from a hydrogen peroxide and an hypochlorite aqueous solution, according to the reaction scheme below (illustrating sodium hypochlorite). Pure singlet oxygen, whichever generated *in situ* or ex *situ,* is then contacted with the rubbery polymer in a solvent (by way of example, a vinylaromatic monomer) in the absence of air, light sources and any photosensitizer. The only side products are water and sodium chloride salt, which makes this rubber pre-grafting process particularly environmental-friendly.

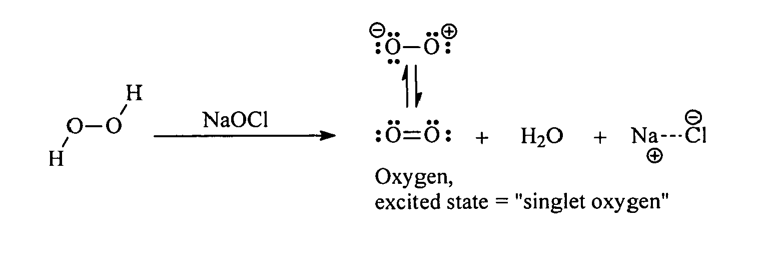

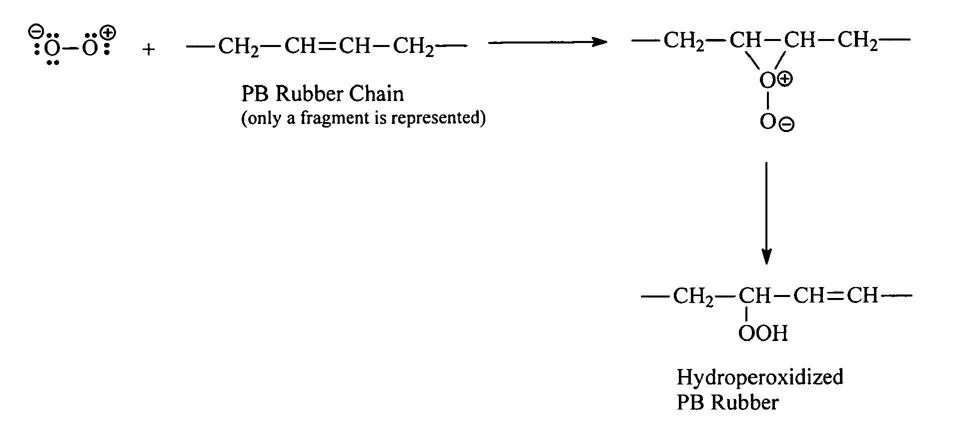

### [Brief summary of the invention]

The present invention relates to a process for preparing hydroperoxidized elastomers comprising :
a) mixing hydrogen peroxide and an hypochlorite solution to generate singlet oxygen,
b) contacting said singlet oxygen with at least an elastomer in a solvent at conditions effective to hydroperoxidize said elastomer.

Steps a) and b) can be made in the same reactor (or vessel) or in separate reactors. If made in the same reactor the singlet oxygen is referred as generated *in situ,* if made in separate reactors the singlet oxygen is referred as generated ex *situ.*

Further to step b) the thus hydroperoxidized elastomer can be recovered, either by desolventization or precipitation in an adapted non-solvent (e.g. methanol), prior to its use in a polymerization process.

In a preferred embodiment steps a) and b) are incorporated in a process for preparing a high impact monovinylaromatic polymer. Advantageously the solvent of the elastomer in step b) is the corresponding monovinylaromatic monomer (and optional comonomer) and the mixture of hydroperoxidized elastomer dissolved in the monovinylaromatic monomer (and optional comonomer) obtained at step b) is submitted to polymerization conditions.

In other words said preferred embodiment is a process for preparing a high impact monovinylaromatic polymer comprising :
a00) forming a polymerizable mixture comprising at least one monovinylaromatic monomer and optionally one or more comonomers,
a0) dissolving at least an elastomer in said polymerizable mixture to form an elastomer containing polymerizable solution,
a) mixing hydrogen peroxide and an hypochlorite solution to generate singlet oxygen,
b) contacting said singlet oxygen with the polymerizable solution at conditions effective to hydroperoxidize said elastomer,
c) polymerizing the solution obtained at step b) optionally in the presence of a free radical initiator, optionally in the presence of chain transfer agents.

### [Detailed description of the invention]

**As regards the elastomers** which can be employed in carrying out the present invention include various unsaturated rubber polymers which are well known to those skilled in the art, such as polybutadiene and other diene rubbers, EPDM terpolymer rubber and polyisoprene. Such rubbers are disclosed in the aforementioned US 5075347. As disclosed there, examples of suitable diene rubbers include mixtures of one or more conjugated 1,3-dienes, such as butadiene, isoprene, piperylene and chloroprene. Such rubbers can take the form of homopolymers of conjugated 1,3-dienes and interpolymers of conjugated 1,3-dienes with one or more copolymerizable monoethylenically unsaturated monomers, e.g., copolymers of isobutylene and isoprene. The rubbery polymer can take the form of a terpolymer of two different alpha-olefin monomers and a non-conjugated diolefin monomer. One alpha-olefin monomer can have from 2 to 4 carbon atoms and the other alpha-olefin monomer from 3 to 16 carbon atoms, with the number of carbon atoms in the one monomer being different than the number of carbon atoms in the other alpha-olefin monomer. Exemplary of such terpolymers are terpolymers of ethylene, propylene and a non-conjugated diolefin monomer (e.g., 5-ethylidene-2-norbornene). Such terpolymers are generally known in the art as EPDM rubbers. Alternatively, the rubbery polymer can be a homopolymer of 1,3-butadiene.

**As regards the hypochlorite solution,** it is any hypochlorite provided that, by reaction with hydrogen peroxide, singlet oxygen is generated. Advantageously sodium hypochlorite is used.

**As regards the process of steps a) and b),** said steps can be made in the same reactor (or vessel) or in separate reactors. If made in the same reactor the singlet oxygen is referred as generated *in situ,* if made in separate reactors the singlet oxygen is referred as generated ex *situ.* Whichever the process, *in situ or* ex *situ,* the elastomer has to be put in a solvent. Appropriate solvents are typically solvents that dissolve well rubbery polymers, i.e. polymer bearing residual unsaturations along their chain backbone. In a specific embodiment the elastomer is dissolved batch-wise in the solvent in a dedicated stirred vessel and then transferred in a stirred vessel in which the hydroperoxidization is carried out. In the ex *situ* process the hypochlorite and the hydrogen peroxide are mixed in a separate vessel, optionally with a solvent, and the resulting mixture containing the singlet oxygen is fed to the vessel containing the elastomer in the solvent. The separate mixing of the hypochlorite and the hydrogen peroxide is optionally made in the presence of a solvent, said solvent is advantageously the same as the solvent in which the elastomer is dissolved. In the *in situ* process hypochlorite and hydrogen peroxide are fed separately to the vessel containing the elastomer dissolved in the solvent and in which the hydroperoxidization will take place. Co-solvents may be added to help the dissolving of the H₂O₂/hypochlorite catalytic system. Rubber hydroperoxidization can be carried out at room temperature or at higher temperatures, provided the reaction temperature is maintained well below the solvent boiling point. Temperature accelerates the hydroperoxidization reaction. The effective production of singlet oxygen can be monitored by the release of activated oxygen bubbles within the rubber solution. The level of rubber hydroperoxidization can be adjusted by fine-tuning the initial concentration of the H₂O₂/hypochlorite (in equimolar ratio) catalytic system introduced in the rubber solution, the reaction temperature, and the reaction time. Said hydroperoxidization can be carried out batch-wise or continuously. The thus hydroperoxidized rubber can be recovered either by desolventization or precipitation in an adapted non-solvent (e.g. methanol), prior to its use in a conventional HiPS process. Said recovery can be carried out batch-wise or continuously.

Whatever the hydroperoxidization process contemplated, the amount of hydroperoxide functions per rubber weight unit can be determined by iodine titration (ASTM D2340, reaction of triphenyl phosphine with the hydroperoxide functions and determination of the formed triphenyl phosphine oxide by GC).

**In a preferred embodiment** steps a) and b) are incorporated in a process for preparing a high impact monovinylaromatic polymer. Advantageously the solvent of the elastomer in step b) is the corresponding monovinylaromatic monomer (and optional comonomer) and the mixture of hydroperoxidized elastomer dissolved in the monovinylaromatic monomer (and optional comonomer) obtained at step b) is submitted to polymerization conditions. Steps a) and b) can be made in the same reactor (or vessel) or in separate reactors. If made in the same reactor the singlet oxygen is referred as generated *in situ,* if made in separate reactors the singlet oxygen is referred as generated ex *situ.* The solution of rubber in monovinylaromatic monomer (and optional comonomer) may be mixed with up to about ten percent (10%) by weight, based on the monovinylaromatic monomer employed, of an inert solvent so as to lower the polymerization bulk viscosity, to moderate polymerization heat and to improve thermal exchanges and heat homogeneity within the bulk. Suitable diluents include aromatic solvents such as ethylbenzene, toluene, xylenes, cyclohexane, and aliphatic hydrocarbon solvents, such as dodecane, and mixtures thereof. Any solvent useful to improve heat homogeneity within the bulk during polymerization, that can be removed after polymerization of the monovinylaromatic monomer, and that does not interfere with the polymerization of the monovinylaromatic monomer and the optional comonomer, can be used with the process of the present invention.

Singlet oxygen production and rubber hydroperoxidization are both carried out directly within the high impact monovinylaromatic polymer process. Preferably, they are carried out at room temperature during the batch-wise dissolving of the rubbery polymer in monovinylaromatic monomer and optional comonomer. The conditions are identical to those depicted above, except that the hydroperoxidization reaction is carried out in a rubber in monovinylaromatic monomer and optional comonomer solution and that the temperature is maintained below around 30°C. This second process does not require any additional step for isolating the modified rubber (no desolventization or rubber polymer precipitation required). The rubber hydroperoxidization selectivity is however reduced as side monovinylaromatic monomer and optional comonomer oxidation reactions may occur.

As regards the monovinylaromatic monomer, it relates to any aromatic having a vinyl function. By way of example mention may be made of styrene, vinyl toluene, alphamethylstyrene, alphaethylstyrene, methyl-4-styrene, methyl-3-styrene, methoxy-4-styrene, hydroxymethyl-2-styrene, ethyl-4-styrene, ethoxy-4-styrene, dimethyl-3,4-styrene, chloro-2-styrene, chloro-3-styrene, chloro-4-methyl-3-styrene, tert.-butyl-3-styrene, dichloro-2,4-styrene, dichloro-2,6-styrene,vinyl-1-naphtalene and vinylanthracene. It would not depart from the scope of the invention to use more than one monovinylaromatic monomer. A part of the monovinylaromatic monomer may be replaced by unsaturated monomers copolymerizable with styrene. By way of example mention may be made of alkyl esters of acrylic or methacrylc acid, acrylonitrile and methacrylonitrile. The proportion of comonomer may be from 0 to 50% by weight for respectively 100 to 50% of the monovinylaromatic monomer.

The rubber is present in the monovinylaromatic polymer in an amount up to 35% by weight of the high impact monovinylaromatic polymer (the monovinylaromatic polymer containing the rubber) which means up to 35 % of rubber and at least 65 % of the polymerized, grafted and non-grafted, monovinylaromatic monomer and optional comonomer. Advantageously the rubber is present in the monovinylaromatic polymer in an amount from about 1 to 20% for respectively 99 to 80 % of the polymerized, grafted and non-grafted, monovinylaromatic monomer and optional comonomer. More advantageously the rubber is present in the monovinylaromatic polymer in an amount from about 2 to 10% for respectively 98 to 90 % of the polymerized, grafted and non-grafted, monovinylaromatic monomer and optional comonomer.

In a specific embodiment the monovinylaromatic polymer comprises :
i) from 60 to 100 weight % of one or more C₈₋₁₂ monovinylaromatic monomers; and
ii) from 0 to 40 weight % of one or more monomers selected from the group consisting of C₁₋₄ alkyl esters of acrylic or methacrylc acid and acrylonitrile and methacrylonitrile; which polymer may contain from 1 to 20 weight %, advantageously 2 to 10 % of one or more rubbery polymers.

By way of example rubbery polymers can be selected from the group consisting of:
a) co- and homopolymers of C₄₋₆ conjugated diolefins,
b) copolymers comprising from 60 to 85 weight % of one or more C₄₋₆ conjugated diolefins and from 15 to 40 weight % of a monomer selected from the group consisting of acrylonitrile and methacrylonitrile and
c) copolymers comprising from 20 to 60, preferably from 40 to 50 weight % of one or more C₈₋₁₂ vinyl aromatic monomers which are unsubstituted or substituted by a C₁₋₄ alkyl radical and from 60 to 40, preferably from 60 to 50 weight % of one or more monomers selected from the group consisting of C₄₋₆ conjugated diolefins. The rubber may be prepared by a number of methods, preferably by emulsion or solution polymerization. These processes are well known to those skilled in the art.

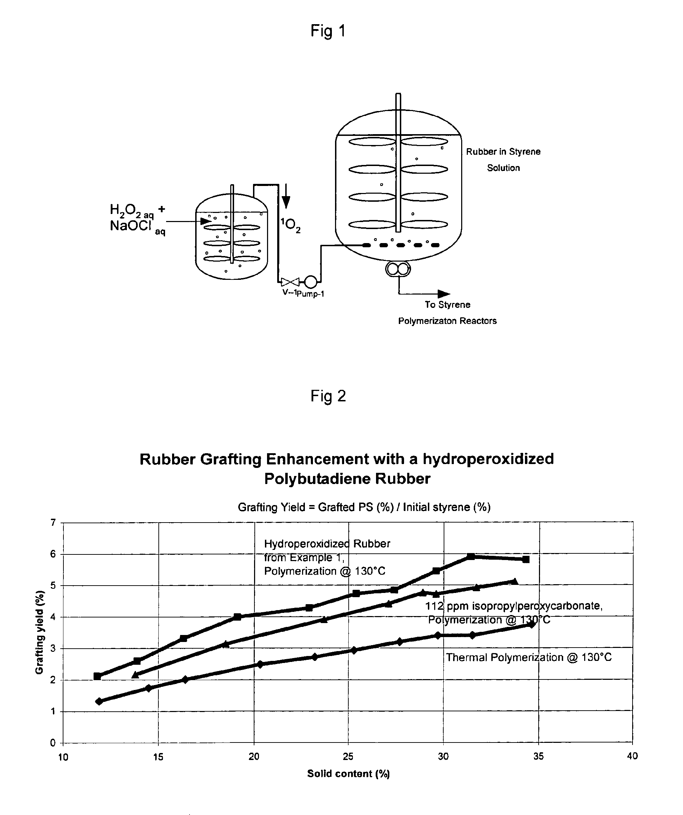

In a specific embodiment of the present invention, the H₂O₂/hypochlorite catalytic system is not directly contacted to the rubbery polymer and to monovinylaromatic monomer (and optional comonomer). Singlet oxygen is generated in a specifically dedicated reactor containing only an aqueous solution of the catalytic system. The pure singlet oxygen released from this reactor is then conveyed and made bubble through the rubbery polymer in monovinylaromatic monomer (and optional comonomer) solution, while the rubber is being dissolved in monovinylaromatic monomer (and optional comonomer) at a temperature below 30°C. The effective production of singlet oxygen can be monitored by the gas release rate from the reactor, called "singlet oxygen generator", and by the red chemiluminescence of the catalytic system present in this reactor. This process is particularly safe as only pure singlet oxygen is contacted smoothly to the rubber in monovinylaromatic monomer (and optional comonomer) solution, without raising any risks of monovinylaromatic monomer (and optional comonomer) inflammation. Additionally, the used catalytic system consists only of water containing chloride which is harmless for the environment. The catalytic system in the "singlet oxygen generator" should be renewed whenever the singlet by controlling the singlet oxygen bubbling rate within the rubber in monovinylaromatic monomer (and optional comonomer) solution. A scheme of the "singlet oxygen generator" to be connected to the rubber dissolution tank and in which the monovinylaromatic monomer is styrene is presented in fig 1.

At the beginning of the polymerization the reacting solution is at a point prior to the rubber/ monovinylaromatic monomer inversion point, i.e. the point at which the solution being reacted goes from monovinylaromatic polymer particles in a rubber/ monovinylaromatic monomer matrix to rubber particles in a monovinylaromatic polymer matrix. In other words when the degree of polymerization is about equal to the weight % of rubber in the system it inverts e.g. the monovinylaromatic monomer / monovinylaromatic polymer phase becomes continuous and the rubber phase becomes discontinuous. Monovinylaromatic monomer is polymerized around and within the rubber particles which leads to monovinylaromatic polymer inclusions in the rubber particles. A portion of the monovinylaromatic monomer is polymerized by grafting on the rubber, another portion is homopolymerized, said portion is referred to as a "non-grafting" polymerization. A part of the monovinylaromatic monomer may be replaced by unsaturated copolymerizable monomers as explained above. The same mechanism of "grafting" and "non-grafting" occurs with the comonomer, which means one portion of the monovinylaromatic monomer and of the comonomer are polymerized by grafting on the rubber and another portion of the monovinylaromatic monomer and of the comonomer are copolymerized.

The hydroperoxidized rubber solution in monovinylaromatic monomer (and optional comonomer), produced by any of the abovementioned process, is polymerized according to the conventional high impact monovinylaromatic polymer process. Polymerization of the partially hydroperoxidized rubber-containing monovinylaromatic monomer (and optional comonomer) solution can be suitably initiated thermally or in the presence of the organic peroxides traditionally used in the high impact monovinylaromatic polymer conventional process. Grafting from the hydroperoxide groups of the modified rubber chains proceeds during monovinylaromatic monomer (and optional comonomer) polymerization essentially by H-abstraction reactions from the hydroperoxidic-O-O-H functions (transfer reactions), but also by -O-O- cleavage. Interestingly, hydroperoxidized rubbers markedly contribute to enhance monovinylaromatic monomer (and optional comonomer) polymerization rates, so that organic initiators are basically not required. Monovinylaromatic monomer (and optional comonomer) radical polymerization can be carried out by any kind of processes, batch-wise or in a continuous process. In that latter case, a series of continuous stirred tank reactors and / or plug-flow reactors can be considered. A special attention should however be paid to the reactor wherein phase inversion takes place, namely the so-called "inversion reactor", which can be the first reactor of the high impact monovinylaromatic polymer production line or the second one, located downstream a pre-inversion reactor. Overgrafting and/or rubber particle dismantling due to inappropriate phase viscosities should be avoided in the inversion reactor, all the more rubber particle shells are made thinner by the enhanced rubber utilization efficiency of the present process. It is recommended to inject in the rubber solution feed or in the inversion reactor some chain transfer agents, e.g. n- or ter-dodecylmercaptan so as to increase the gap between phase viscosities during phase inversion, and to limit therefrom rubber particle membrane shearing. A CSTR inversion reactor can be advantageously used in the present process and operated at a preferably high solid content (≥ 5 times the %wt rubber in the feed stream) to limit as well rubber particle dismantling. In the subsequent reactors, styrene polymerization proceeds further until the solid content reaches at least 65%wt. The resulting rubber-toughened polymer is then devolatilized using the conventional desolventization techniques.

### [Examples]

### Example 1:

Production of partially hydroperoxidized polybutadiene rubber using singlet oxygen generated by the H₂O₂/NaOCl catalytic system in a separate process, in solution in ethyl benzene.
1.62 mmol of hydrogen peroxide (H₂O_{2 aq} 30%wt commercial solution - 0.184 g) and 4.41 mmol of sodium hypochlorite (NaOCl _{aq} 9.6%wt commercial solution - 3.42 g) are added to a 20%wt synthetic polybutadiene rubber (CB 528 T from Lanxess, commercial Li-BR, 150 g) solution in ethylbenzene (600 g). The solution is then maintained under vigorous agitation at room temperature for 8 hours. The resulting modified rubber polymer is subsequently precipitated in methanol, filtered and dried under primary vacuum at room temperature.

### Example 2:

Production of rubber-toughened PS of enhanced rubber phase grafting and rubber utilization efficiency from partially hydroperoxidized rubber.
42 g (6%wt) of the partially hydroperoxidized rubber prepared from Example 1 were dissolved for 8 hours at room temperature in styrene (616 g, 88%wt) and ethylbenzene (42 g, 6 %wt). When dissolution was completed, the hydroperoxidized rubber in styrene and EB solution was transferred into a 1.5 liter continuously stirred batch reactor. The solution temperature was raised to 130°C so as to allow styrene to polymerize. Liquid adsorption chromatography at PS critical point (LC-CAP) was used for assessing the weight amount of styrene converted effectively into grafted PS at different solid content on bulk aliquots collected all along styrene polymerization. When solid content reached 60%wt, the polymer solution was poured in alumina panels and heated at 150°C for 3 hours and 180°C for 2 hours in an oven for polymerization finishing. The final polymer composite was submitted to laser granulometry and dynamic mechanical analysis (DMA, 1 Hz). The HIPS material appeared to consist of a dispersion of 1.8 µm (D50 surface) salami-like particles in a PS matrix, the rubber phase volume fraction calculated from DMA results was of 33 %, i.e. comparable to what could be obtained from non-modified commercial polybutadiene rubber of similar Solution Viscosity and microstructure in the presence of highly-grafting peroxide (112 ppm isopropyl peroxycarbonate). Another polymerization was carried out with same non-modified commercial polybutadiene rubber of similar Solution Viscosity and microstructure and without initiator (only the temperature) See Table 1 below.

| Formulation | Average Rubber Particle Size, D50 surf (µm) | Rubber Phase Volume Fraction (%vol) | %wt PS produced per hour @ 60%wt solids |
|---|---|---|---|
| 6%wt commercial LiBR CB 528 T, thermal initiation | 2.3 | 29 | 21.0 |
| 6%wt commercial LiBR CB 528 T, 112 ppm isopropyl peroxycarbonate | 1.9 | 32 | 24.1 |
| 6%wt hydroperoxidized LiBR CB 528 T from Ex. 1, thermal initiation | 1.8 | 33 | 24.2 |

| | | | |
|---|---|---|---|
| All the polymerization runs were performed at 130°C, with an agitation speed of 100 rpm. | | | |

LC-CAP results - see fig 2 - revealed that the rubber phase was grafted at a level significantly higher than during a reference thermal HIPS polymerization process or than when polymerizing a commercial (non-hydroperoxidized) rubber in styrene solution in the presence of moderate amounts (112 ppm/feed) of a good graft-promoting peroxide isopropyl peroxycarbonate initiator.

The highest grafting yield is obtained with the hydroperoxidized rubber of the invention. The lowest grafting yield is obtained with the non-hydroperoxidized rubber and without initiator. An intermediate grafting yield is obtained with the non-hydroperoxidized rubber and with isopropyl peroxycarbonate as initiator.

## Claims

1. Process for preparing hydroperoxidized elastomers comprising :
a) mixing hydrogen peroxide and an hypochlorite solution to generate singlet oxygen,
b) contacting said singlet oxygen with at least an elastomer in a solvent at conditions effective to hydroperoxidize said elastomer.

2. Process according to claim 1 wherein further to step b) the thus hydroperoxidized elastomer is recovered, either by desolventization or precipitation in an adapted non-solvent prior to its use in a polymerization process.

3. Process for preparing a high impact monovinylaromatic polymer comprising :
a00) forming a polymerizable mixture comprising at least one monovinylaromatic monomer and optionally one or more comonomers,
a0) dissolving at least an elastomer in said polymerizable mixture to form an elastomer containing polymerizable solution,
a) mixing hydrogen peroxide and an hypochlorite solution to generate singlet oxygen,
b) contacting said singlet oxygen with the polymerizable solution at conditions effective to hydroperoxidize said elastomer,
c) polymerizing the solution obtained at step b) optionally in the presence of a free radical initiator, optionally in the presence of chain transfer agents.

4. Process according to claim 1 or 3 wherein steps a) and b) are made in the same reactor (or vessel).

5. Process according to claim 1 or 3 wherein steps a) and b) are made in separate reactors.

6. Process according to any one of claims 3 to 5 wherein the monovinylaromatic monomer is styrene.

7. Process according to any one of the preceding claims wherein the elastomer is polybutadiene.
